# EUROPEAN PATENT SPECIFICATION

(11) **EP 4 162 362 B1**
(45) Date of publication and mention of the grant of the patent: **30.07.2025**
(21) Application number: 21828597.1
(22) Date of filing: 25.06.2021
(51) Int. Cl.: G06F 9/455, G06F 8/61, G06F 8/60, H04L 41/50, H04L 41/5009, H04W 16/18

(54) **METHOD AND SYSTEM FOR EDGE CONFIGURATION SERVER (ECS) LIFECYCLE MANAGEMENT**
VERFAHREN UND SYSTEM ZUR LEBENSZYKLUSVERWALTUNG EINES EDGE-KONFIGURATIONSSERVERS (ECS)
PROCÉDÉ ET SYSTÈME DE GESTION DE CYCLE DE VIE DE SERVEUR DE CONFIGURATION PÉRIPHÉRIQUE (ECS)

(30) Priority: 25.06.2020 IN 202041026980; 21.06.2021 IN 202041026980
(43) Date of publication of application: 12.04.2023
(73) Proprietor: Samsung Electronics Co., Ltd., Gyeonggi-do 16677 (KR)
(72) Inventor: GUPTA, Nishant, Bangalore 560037 (IN); GAUTAM, Deepanshu, Bangalore 560037 (IN); FEATHERSTONE, Walter, Staines Middlesex TW18 4QE (GB)
(74) Representative: HGF
(86) International application number: PCT/KR2021/008009
(87) International publication number: WO 2021/261953

(56) References cited:
- WO-A1-2008/025514
- US-A1- 2019 266 012
- US-A1- 2020 021 487
- "3rd Generation Partnership Project; Technical Specification Group Services and System Aspects; Architecture for enabling Edge Applications; (Release 17)", 3GPP STANDARD; TECHNICAL SPECIFICATION; 3GPP TS 23.558, 3RD GENERATION PARTNERSHIP PROJECT (3GPP), no. V0.3.0, 4 June 2020 (2020-06-04), pages 1 - 70, XP051894073
- "3rd Generation Partnership Project; Technical Specification Group Services and System Aspects; Management and orchestration; Generic management services; (Release 16)", 3GPP STANDARD; TECHNICAL SPECIFICATION; 3GPP TS 28.532, 3RD GENERATION PARTNERSHIP PROJECT (3GPP), vol. SA WG5, no. V16.3.0, 27 March 2020 (2020-03-27), pages 1 - 230, XP051861134
- "3rd Generation Partnership Project; Technical Specification Group Services and System Aspects; Management and orchestration; Performance assurance (Release 16)", 3GPP STANDARD; TECHNICAL SPECIFICATION; 3GPP TS 28.550, 3RD GENERATION PARTNERSHIP PROJECT (3GPP), vol. SA WG5, no. V16.4.0, 27 March 2020 (2020-03-27), pages 1 - 114, XP051861141

## Description

### [Technical Field]

The present invention relates to wireless communication and more particularly relates to method and system for Edge Configuration Server (ECS) lifecycle management. In particular, the present invention relates to a method and system for deploying an Edge Configuration Server (ECS) by a provider entity in an edge computing communication system.

### [Background Art]

In recent years several broadband wireless technologies have been developed to meet the growing number of broadband subscribers for providing better applications and services. Second generation wireless communication system has been developed to provide voice services while ensuring the mobility of users. Third generation wireless communication system supports not only the voice service but also data service. In recent years, fourth wireless communication system has been developed to provide high-speed data service. However, currently, the fourth-generation wireless communication system suffers from a lack of resources to meet the growing demand for high-speed data services. This problem is solved by the deployment of fifth generation wireless communication system to meet the ever growing demand for high speed data services. Furthermore, the fifth-generation wireless communication system provides ultra-reliability and supports low latency applications.

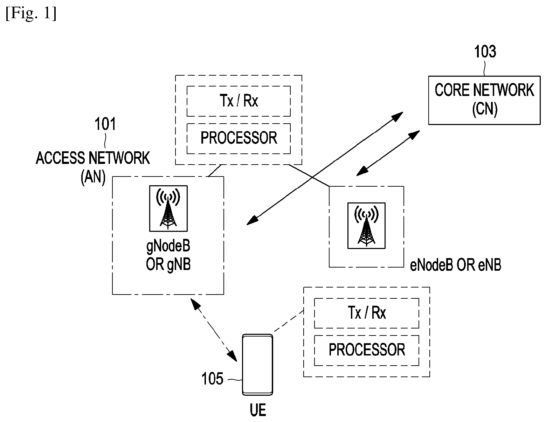

**Figure 1** depicts an exemplary implementation details of fifth-generation (5G) wireless communication system. 5G wireless system consists of 5G Access Network (AN) 101, 5G Core Network 103 and UE 105 as per *3GPP TS 23.501 specification.* With recent developments in 5G system, it is expected that 5G systems should be able to provide optimized support for a various communication services, different traffic loads, and different end user communities. For example, the communication services based on network slicing may include Vehicle-to-Everything (V2X) services. The 5G system aims to enhance its capability to meet KPI requirements of emerging technologies like V2X applications. For these advanced applications, the requirements, such as data rate, reliability, latency, communication range and speed, are made more stringent. To make 5G system seamless Enhanced Mobile Broadband (eMBB) becomes one of the key technologies that enable network slicing, fixed mobile convergence (FMC) which includes wireless-to-the-everything (WTTx) and fibre-to-the-everything (FTTx). Along with the aforesaid, the 5G systems is expected to provide native support for network slicing as well. For optimization and resource efficiency, the 5G system will select the most appropriate 3GPP or non-3GPP access technology for a communication service, potentially allowing multiple access technologies to be used simultaneously for one or more services active on a UE. Further, massive IoT connections that support for massive Internet of Things (mIoT) brings many new requirements in addition to MBB enhancements. The communication services with massive IoT connections such as smart households, smart grid, smart agriculture and smart meter will require the support of a large number and high-density IoT devices to be efficient and cost effective. Operators can use one or more network slice instances to provide these communication services, which require similar network characteristics, to different vertical industries. 3GPP TS 28.530 and 28.531 defines the management of Network Slice in 5G networks. It further defines the concept of communication services, which are provided using one or multiple Network Slice. A Network Slice Instance (NSI) may support multiple Communication Service Instances (CSI). Similarly, a CSI may utilize multiple NSIs.

In the recent development in the 5G systems, 3GPP SA6 group is working on an architecture for enabling edge computing (3GPP TR 23.558), which specifies an application framework or an enabling layer platform to support Edge Computing in 3GPP specified networks, (e.g. discovery of edge services, authentication of the clients). The work includes the interactions between the UE and the enabling layer platform, and the interactions between the applications deployed over edge and the enabling layer platform. Further, the work is to facilitate integration with the underlying 3GPP core network. The work defines Edge Application Server (EAS) or Edge Application as a piece of software running and deployed on virtual infrastructure at the edge of the 3GPP network.

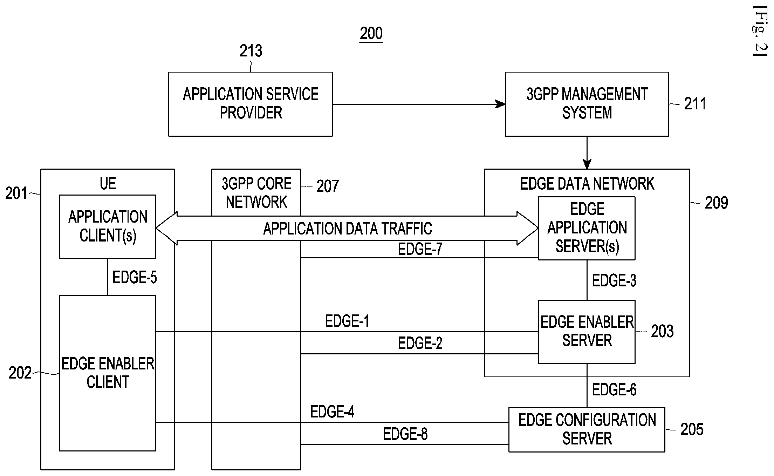

**Figure 2** illustrates an exemplary implementation details of Application Architecture for Edge Apps (EDGEAPP) 200 for enabling edge computing, as per the state-of-the-art technique. The EDGEAPP 200 is a new activity, which groups across 3GPP starting to look at this. It aims to enable applications to be hosted on the Edge of the 3GPP network. One of the main areas focused on is to minimalize the impact to Edge based applications - so they do not need major App redevelopment for UE use at the Edge. As can be seen in the **figure 2****,** UE 201 is in communication with Edge data network configuration server 205 and Edge data network 209. The Edge data network 209 communicates with 3GPP Core Network 207 and 3GPP Management system 211. The 3GPP Management system 211 is in communication with the edge Application Provider 213. The UE comprises Edge Enabler Client 202 that enables discovery of Edge Applications and provisioning of configuration data. The Edge data network comprises Edge Enabler Server 203 that provides information related to the Edge Application, such as availability/enablement and related configuration, to the Edge Enabler client 202 and discloses capabilities of 3GPP network to Edge Applications. The Edge Configuration Server 203 provides Edge Data Network Configuration information to the Edge Enabler Client 202.

However, the lifecycle management of edge components is considered to be a crucial management aspect. SA6 has defined EES (Edge Enabler Server) and ECS (Edge Configuration Server). ECS can be a 3GPP network function deployed at a central location serving several EES. The lifecycle of ECS, as 3GPP network function are instantiation, termination, scaling, etc. which need to be managed efficiently. Currently, in TS 28.532 Generic Provisioning Management (createMOI operation) Service is being defined. Further, in 3GPP TS 28.526 procedures to deploy a VNF are defined. However, currently deployed systems fail to manage the lifecycle of ECS efficiently while providing a capability, but not limited to, instantiation, termination, scaling.

Thus, as may be seen, there exists a need to overcome at least one of the aforementioned shortcomings in the current wireless technologies.

WO 2008/025514 A1 relates to systems and methods for rapid application configuration and deployment. Various embodiments described therein provide systems, methods, and software to reduce the complexity of in purchasing, configuring, modifying, and deploying software applications, such as large-scale enterprise resource planning ("ERP") applications. Some embodiments reduce the complexity of configuring such application by providing tools that place configuration setting decisions in a context where the decision-making is easier. Further, some embodiments may provide tools to input application configuration preferences that, when received, are utilized by one or more processes to make configuration decisions that are consistent across the application under configuration.

### [Disclosure of Invention]

### [Solution to Problem]

The scope of protection conferred is determined from the claims.

.

### [Brief Description of Drawings]

These and other features, aspects, and advantages of the present invention will become better understood when the following detailed description is read with reference to the accompanying drawings in which like characters represent like parts throughout the drawings, wherein:
**Figure 1** illustrates an exemplary implementation details of fifth-generation (5G) wireless communication system., according to an embodiment of the present disclosure;
**Figure 2** illustrates an exemplary implementation details of Application Architecture for Edge Apps (EDGEAPP) for enabling edge computing, as per the state-of-the-art technique; and
**Figure 3** illustrates a signal flow for ECS creation and deployment procedure for ECS lifecycle management, according to an embodiment of the present disclosure.
**Figure 4** illustrates a flow diagram for the deployment of the ECS, according to an embodiment of the present disclosure.
**Figure 5** illustrates another exemplary diagram of a source node, according to an embodiment of the present disclosure.
**Figure 6** is a diagram illustrating the configuration of a terminal 1500 in a wireless communication system, according to an embodiment of the present disclosure.

Further, skilled artisans will appreciate that elements in the drawings are illustrated for simplicity and may not have been necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

### Mode for the Invention

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

Unless otherwise defined, all technical and scientific terms used herein have the same meaning as commonly understood by one of ordinary skilled in the art to which this invention belongs. The system, methods, and examples provided herein are illustrative only and not intended to be limiting.

The present disclosure provides a method and system for ECS lifecycle management in wireless communication systemsfor deploying the Edge Configuration Server (ECS). In particular, an ECS Instance Object Class (IOC) is provided in an EDGE Network Resource Model (NRM) as an ECSFunction IOC. The NRM is maintained by 3GPP Management system containing IOCs of each object to be managed as Managed Functions. The 5G NRM is maintained in 3GPP TS 28.541 and TS 28.622. This IOC represents the properties of an ECS. The ECSFunction IOC is to be included in TS 28.541. This IOC includes attributes inherited from SubNetwork IOC (as defined in TS 28.622[30]). The various attributes are defined in below Table 1:

**[Table 1]**

| **Attribute name** | **Support Qualifier** | **Description** |
|---|---|---|
| pLMNIdList | M | As defined in TS 28.541 |
| sNSSAIList | O | As defined in TS 28.541 |
| eCSIdentifier | M | Identifier of the ECS |
| eCSEndPoint | M | The endpoint address (e.g. URI, IP address) of the ECS |
| eESInfo | M | Information about EES known to ECS |
| >eDNConnectionInfo | | |
| >>DNN/APN | M | Data Network Name/Access Point Name |
| >>S-NSSAI | O | The Single Network Slice Selection Assistance Information |
| >eESEndPoint | M | The endpoint address (e.g. URI, IP address) of the EES |
| eDNServiceArea | O | This parameter defines the service location for the EDN e.g geometric shape covering an area (long, lat, circle, radius); access network defined (e.g. Cell IDs, Tracking Areas); network defined (e.g. a specific EDN(s)), civic address. |
| ECSPInfo | O | Information relating to the Edge Computing Service Provider (ECSP) |

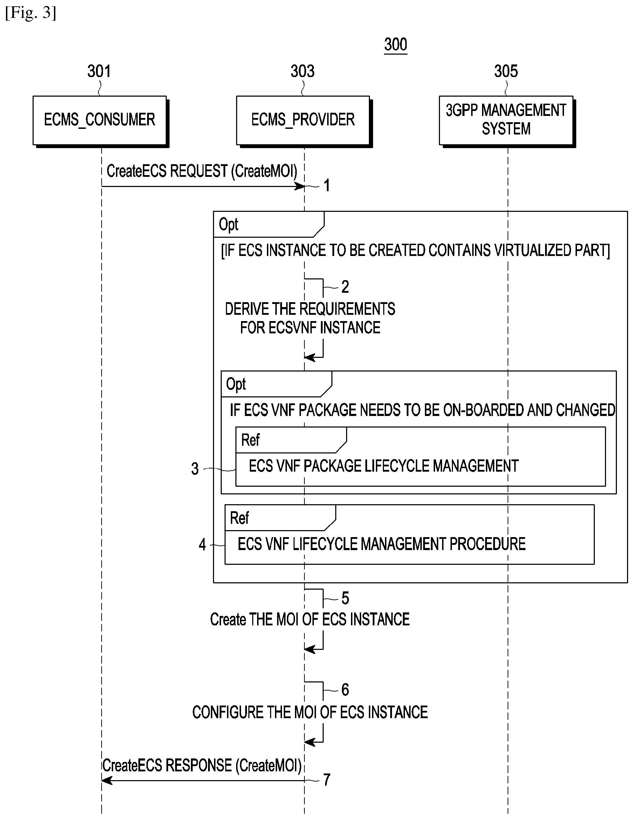

**Figure 3** illustrates a signal flow for ECS creation and deployment procedure for ECS lifecycle management, according to an embodiment of the present disclosure. The mechanism 300 shown in the figure 3 may be implemented in the Edge Apps (EDGEAPP) 200 as shown in the figure 2. The mechanism for creation and deployment of the ECS has following steps:

**At step 1:** Egde Computing Management Service Provider (ECMS_P) 303 receives a CreateECS request (this will use createMOI operation defined in 3GPP TS 28.532) from Edge Computing Management Service Consumer (ECMS_C) 301 with ECS related requirements. The following are the list of requirements, which can be provided with the request as part of attributeListIn parameter of createMOI operation.
a. EDNidentifier: Identifying the EDN to connect to.

The above ECS requirements will be defined as attributes of ECSFunction Information Object Class (IOC) on which the createMOI operation would act. The IOC will be defined as part of 5G Network Resource Model (NRM) in 3GPP TS 28.541. As an example, the one or more requirements includes, but not limited to, at least one of an EDNIInfo that includes information regarding EDN connection including DNN/ APN, EES endpoint and S-NSSAI. Further, the one or more attributes includes, but not limited to, pLMNIdList, a sNSSAIList, an endpoint information of the ECS, information about edge enabler server (EES) known to ECS including EES end point, and an edge data network (EDN) connection information as shown in the table 1.

**At step 2:** If ECS instance to be created contains virtualized part, ECMS_P derives the requirements for ECS VNF instance based on the ECS network function related requirements.

**At step 3:** If corresponding ECS VNF Package needs to be on-boarded or changed, the NCMS_P invoke corresponding VNF Package management procedure as described in clause 4.3 in TS 28.526.

**At Step 4:** The NCMS_P invokes VNF lifecycle management with requirements for ECS VNF instance as descried in clause 4.2.2.2 in TS 28.526.

**At Step 5:** The ECMS_P creates the MOI (Managed Object Instance) for ECSFunction class. The MOI shall contain attributes as defined in ECSFunction IOC.

**At Step 6:** The ECMS_P configures the new created MOI with corresponding configuration information as per the information model definition for Edge NRM 3GPP TS 28.541.

**At Step 7:** The ECMS_P sends the CreateECS response (this will use createMOI operation defined in 3GPP TS 28.532) to ECMS_C with identifier of MOI and with identifier of ECMS_P which actually maintains the MOI for ECS instance.

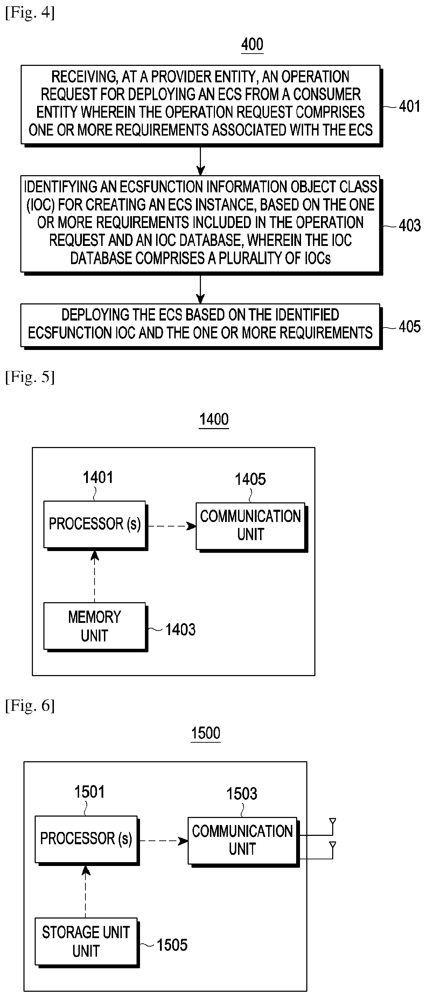

**Figure 4** illustrates a flow diagram for the deployment of the ECS, according to an embodiment of the present disclosure. The deployment of the ECS 205 may be implemented in the EDGEAPP 100 for enabling edge computing as shown in figure 2 and figure 3 as disclosed above. Further, for the sake of simplicity some the explanation as applicable has been omitted herein. Further for the ease of explanation same reference numerals has been used in the forthcoming paragraphs. The method 400 includes the following steps.

At block 401, the method 400 initially, receives, at a provider entity an operation request for deploying an ECS from a consumer entity. The operation request comprises one or more requirements associated with the ECS. In an implementation, the one or more requirements includes at least one of an EDNIInfo that includes information regarding EDN connection including DNN/APN, EES endpoint and S-NSSAI. As an example, alternatively, the provider entity or an ECMS_P 303 referred to an Edge Computing Management Service Provider (ECMSP) 303 and consumer entity or an ECMS_C 301 referred to ECMS consumer. The mechanism at the block 401 corresponds to the mechanism as explained in the step 1 of the figure 3.

Thereafter, at block 403, the method 400 further, identifies an ECSfunction Information Object Class (IOC) for creating an ECS instance, based on the one or more requirements included in the operation request and the IOC database. The IOC database comprises one or more IOCs.

After, identifying the ECSfunction Information Object Class (IOC), the method 400 performs obtaining a plurality of attributes associated with the identified ECSfunction IOC from the IOC database. The plurality of attributes including at least one of a pLMNIdList, a sNSSAIList, an endpoint information of the ECS, information about edge enabler server (EES) known to ECS including EES end point, and an edge data network (EDN) connection information.

As a further implementation, the method 400 performs determining if the ECS instance to be created contains a virtualized part. This determination is performed by deriving the requirements for ECS VNF instance. This step corresponds to step 2 of the figure 3. Thereafter, determining if a VNF instance, of the corresponding virtualized part, is required to be one of to be on-boarded or updated. Based on the determination a VNF Package management for the corresponding VNF instance is being invoked. This step corresponds to step 3 of the figure 3. Thereafter, the method 400 performs invoking a VNF lifecycle management with the determined requirement for the VNF instance for the ECS instance. This step corresponds to step 4 of the figure 3.

In yet further implementation, the method 400, creates a Managed Object Instance (MOI) for the identified ECSfunction IOC based on the obtained plurality of attributes. In an embodiment the MOI corresponds to the ECS instance. This step corresponds to step 5 of the figure 3. In particular, the method 400, performs replacing a value of the one or more attributes associated with the ECSfunction IOC based on the one or more requirements included in the operation request, during creation of the MOI. Thereby, configuring the new created MOI with corresponding configuration information as per the information model definition for Edge NRM 3GPP TS 28.541 as explained in the step 6 of the figure 3.

Thereafter, at block 405, the method 400, deploys the ECS based on the identified ECSfunction IOC and the one or more requirements. This step is based on the steps 5-6 of the figure 3.

After creating and configuring the MOI of the ECS instance, the method 400, performs transmitting an operation request response, to the consumer entity, along with an identifier associated with the MOI and another identifier associated with the ECSMP that maintains the MOI for the ECS instance in response to the deployment of the ECS. As an example, the operation request is a create MOI request and the operation request response is a createECS. This step corresponds to step 7 of the figure 3.

In view of the aforesaid, there are provided various advantageous features relating to the present disclosure:
- It will be possible to manage the Lifecycle of the Edge components as defined in SA6, specifically the ECS (with its registered EES(s)) whilst accounting for their associated requirements.

**Figure 5** illustrates another exemplary diagram of a network node. The network node 1400 may include a communication unit 1405 (e.g., communicator or communication interface), a memory unit 1403 (e.g., storage), and at least one processor 1401. Further, the network node 1400 may also include the Cloud -RAN (C-RAN), a Central Unit (CU), a core Network (NW), a Distributed unit (DU) or the any other possible network (NW) entity. The various examples of the network node is explained above therefore omitted here for the sake of brevity. The communication unit 1405 may perform functions for transmitting and receiving signals via a wireless channel.

In an example, the processor 1401 may be a single processing unit or a number of units, all of which could include multiple computing units. The processor 1401 may be implemented as one or more microprocessors, microcomputers, microcontrollers, digital signal processors, central processing units, state machines, logic circuitries, and/ or any devices that manipulate signals based on operational instructions. Among other capabilities, the processor 1401 is configured to fetch and execute computer-readable instructions and data stored in the memory.

The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an Al-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning.

The memory may include any non-transitory computer-readable medium known in the art including, for example, volatile memory, such as static random access memory (SRAM) and dynamic random access memory (DRAM), and/or non-volatile memory, such as read-only memory (ROM), erasable programmable ROM, flash memories, hard disks, optical disks, and magnetic tapes.

**Figure 6** is a diagram illustrating the configuration of a terminal 1500 in a wireless communication system according to an embodiment of the present disclosure. The configuration of Figure 6 may be understood as a part of the configuration of the terminal 1500. Hereinafter, it is understood that terms including "unit" or "module" at the end may refer to the unit for processing at least one function or operation and may be implemented in hardware, software, or a combination of hardware and software.

Referring to Figure 6, the terminal 1500 may include a communication unit 1503 (e.g., communicator or communication interface), a storage unit 1505 (e.g., storage), and at least one processor 1501. By way of example, the terminal 1500 may be a User Equipment, such as a cellular phone or other device that communicates over a plurality of cellular networks (such as a 3G, 4G, a 5G or pre-5G network or any future wireless communication network).

The communication unit 1503 may perform functions for transmitting and receiving signals via a wireless channel.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

## Claims

1. A method for deploying an edge configuration server, ECS, by a provider entity in an edge computing communication system, the method comprising:
receiving (401) an operation request related to deployment of an ECS instance from a consumer entity, wherein the operation request comprises one or more requirements associated with the ECS;
identifying (403) at least one ECSfunction information object class, IOC, for the ECS based on the one or more requirements associated with the ECS; and
creating (405) the ECS instance based on the identified at least one ECSfunction IOC and the operation request,
wherein the ECSfunction IOC is defined with at least one attribute comprising endpoint information of the ECS, information about an edge enabler server, EES, known to the ECS including EES endpoint, and edge data network, EDN, connection information,
wherein creating the ECS instance comprises creating a managed object instance, MOI, for the identified at least one ECSfunction IOC based on the at least one attribute, the MOI corresponding to the ECS instance.

2. The method of claim 1, further comprising:
replacing a value of the at least one attribute associated with the identified at least one ECSfunction IOC based on the one or more requirements included in the operation request, during creation of the MOI.

3. The method of claim 1, wherein the one or more requirements comprises at least one of: an edge data network information, EDNIInfo, that includes information regarding EDN connection including DNN/APN, EES endpoint and S-NSSAI.

4. The method of claim 2, further comprising:
transmitting an operation request response, to the consumer entity, along with an identifier associated with the MOI and an identifier associated with the provider entity, after configuring the generated MOI.

5. The method of claim 1, wherein the operation request is a create MOI request.

6. The method of the claim 1, further comprising:
identifying in case that the ECS instance to be created contains a virtualized part;
identifying in case that a virtual network function, VNF, instance, of the corresponding virtualized part, is required to be one of on-boarding or update;
invoking a VNF Package management for the corresponding VNF instance based on the identification; and
invoking a VNF lifecycle management with the identified requirement for the VNF instance for the ECS instance.

7. An apparatus of a provider entity for deploying an edge configuration server, ECS in an edge computing communication system, the apparatus comprising:
a memory (1403); and
a processor (1401) coupled to the memory, wherein the processor is configured to:
receive an operation request related to deployment of an ECS instance from a consumer entity, wherein the operation request comprises one or more requirements associated with the ECS;
identify at least one ECSfunction information object class, IOC, for the ECS based on the one or more requirements associated with the ECS; and
create the ECS instance based on the at least one identified ECSfunction IOC and the operation request,
wherein the ECSfunction IOC is defined with at least one attribute comprising endpoint information of the ECS, information about an edge enabler server, EES, known to the ECS including EES endpoint, and edge data network, EDN, connection information,
wherein creating the ECS instance, the processor is configured to create a managed object instance, MOI, for the identified at least one ECSfunction IOC based on the at least one attribute, the MOI corresponding to the ECS instance.

8. The apparatus of claim 7, wherein the processor is further configured to:
replace a value of the at least one attribute associated with the identified at least one ECSfunction IOC based on the one or more requirements included in the operation request, during creation of the MOI.

9. The apparatus of claim 7, wherein the one or more requirements comprises at least one of: an EDNIInfo that includes Information regarding EDN connection including DNN/APN, EES endpoint and S-NSSAI.

10. The apparatus of claim 7, wherein the processor is further configured to:
transmit an operation request response, to the consumer entity, along with an identifier associated with the MOI and an identifier associated with the provider entity, after configuring the generated MOI.

11. The apparatus of the claim 7, wherein the processor is further configured to:
identify in case that the ECS instance to be created contains a virtualized part;
identify in case that a virtual network function, VNF, instance, of the corresponding virtualized part, is required to be one of on-boarding or update;
invoke a VNF Package management for the corresponding VNF instance based on the identification; and
invoke a VNF lifecycle management with the identified requirement for the VNF instance for the ECS instance.

## Patentansprüche

1. Verfahren zum Einsetzen eines Edge-Konfigurationsservers, ECS, durch eine Anbietereinheit in einem Edge-Computing-Kommunikationssystem, wobei das Verfahren Folgendes umfasst:
Empfangen (401) einer Betriebsanforderung in Bezug auf Einsatz einer ECS-Instanz von einer Verbrauchereinheit, wobei die Betriebsanforderung eine oder mehrere Anforderungen umfasst, die dem ECS zugeordnet sind;
Identifizieren (403) mindestens einer ECS-Funktionsinformationsobjektklasse, ECS-Funktions-IOC, für das ECS auf Grundlage der einen oder mehreren Anforderungen, die dem ECS zugeordnet sind; und
Erzeugen (405) der ECS-Instanz auf Grundlage der identifizierten mindestens einen ECS-Funktions-IOC und der Betriebsanforderung,
wobei die ECS-Funktions-IOC mit mindestens einem Attribut definiert ist, das Endpunktinformationen des ECS, Informationen über einen Edge-Enabler-Server, EES, der dem ECS bekannt ist, einschließlich einesEES-Endpunkts, und Edge-Datennetzwerk-Verbindungsinformationen, EDN-Verbindungsinformationen, umfasst,
wobei das Erzeugen der ECS-Instanz Erzeugen einer verwalteten Objektinstanz, MOI, für die identifizierte mindestens eine ECS-Funktions-IOC auf Grundlage des mindestens einen Attributs umfasst, wobei die MOI der ECS-Instanz entspricht.

2. Verfahren nach Anspruch 1, ferner umfassend:
Ersetzen eines Werts des mindestens einen Attributs, das der identifizierten mindestens einen ECS-Funktions-IOC zugeordnet ist, auf Grundlage der einen oder mehreren Anforderungen, die in der Betriebsanforderung beinhaltet sind, während einer Erzeugung der MOI.

3. Verfahren nach Anspruch 1, wobei die eine oder mehreren Anforderungen mindestens eines von Folgenden umfassen: einer Edge-Datennetzwerkinformation, EDNIInfo, die Informationen bezüglich einer EDN-Verbindung, einschließlich DNN/APN, beinhaltet, einem EES-Endpunkt und einem S-NSSAI.

4. Verfahren nach Anspruch 2, ferner umfassend:
Übertragen einer Betriebsanforderungsantwort an die Verbrauchereinheit zusammen mit einer Kennung, die der MOI zugeordnet ist, und einer Kennung, die der Anbietereinheit zugeordnet ist, nach dem Konfigurieren der generierten MOI.

5. Verfahren nach Anspruch 1, wobei die Betriebsanforderung eine MOI-Erzeugungsanforderung ist.

6. Verfahren nach Anspruch 1, ferner umfassend:
Identifizieren, falls die zu erzeugende ECS-Instanz einen virtualisierten Teil enthält;
Identifizieren, falls eine virtuelle Netzwerkfunktionsinstanz, VNF-Instanz, des entsprechenden virtualisierten Teils eines von On-Boarding oder Aktualisieren sein muss;
Aufrufen einer VNF-Paketverwaltung für die entsprechende VNF-Instanz auf Grundlage der Identifizierung; und
Aufrufen einer VNF-Lebenszyklusverwaltung mit der identifizierten Anforderung für die VNF-Instanz für die ECS-Instanz.

7. Einrichtung einer Anbietereinheit zum Einsetzen eines Edge-Konfigurationsservers, ECS, in einem Edge-Computing-Kommunikationssystem, wobei die Einrichtung Folgendes umfasst:
einen Speicher (1403); und
einen Prozessor (1401), der an den Speicher gekoppelt ist, wobei der Prozessor zu Folgendem konfiguriert ist:
Empfangen einer Betriebsanforderung in Bezug auf den Einsatz einer ECS-Instanz von einer Verbrauchereinheit, wobei die Betriebsanforderung eine oder mehrere Anforderungen umfasst, die dem ECS zugeordnet sind;
Identifizieren mindestens einer ECS-Funktionsinformationsobjektklasse, ECS-Funktions-IOC, für das ECS auf Grundlage der einen oder mehreren Anforderungen, die dem ECS zugeordnet sind; und
Erzeugen der ECS-Instanz auf Grundlage der mindestens einen identifizierten ECS-Funktions-IOC und der Betriebsanforderung,
wobei die ECS-Funktions-IOC mit mindestens einem Attribut definiert ist, das Endpunktinformationen des ECS, Informationen über einen Edge-Enabler-Server, EES, der dem ECS bekannt ist, einschließlich eines EES-Endpunkts, und Edge-Datennetzwerk-Verbindungsinformationen, EDN-Verbindungsinformationen, umfasst,
wobei der Prozessor beim Erzeugen der ECS-Instanz dazu konfiguriert ist, eine verwaltete Objektinstanz, MOI, für die identifizierte mindestens eine ECS-Funktions-IOC auf Grundlage des mindestens einen Attributs zu erzeugen, wobei die MOI der ECS-Instanz entspricht.

8. Einrichtung nach Anspruch 7, wobei der Prozessor ferner zu Folgendem konfiguriert ist:
Ersetzen eines Werts des mindestens einen Attributs, das der identifizierten mindestens einen ECS-Funktions-IOC zugeordnet ist, auf Grundlage der einen oder mehreren Anforderungen, die in der Betriebsanforderung beinhaltet sind, während einer Erzeugung der MOI.

9. Einrichtung nach Anspruch 7, wobei die eine oder mehreren Anforderungen mindestens eines von Folgendem umfassen: einer EDNIInfo, die Informationen bezüglich einer EDN-Verbindung, einschließlich DNN/APN, beinhaltet, einem EES-Endpunkt und einem S-NSSAI.

10. Einrichtung nach Anspruch 7, wobei der Prozessor ferner zu Folgendem konfiguriert ist:
Übertragen einer Betriebsanforderungsantwort an die Verbrauchereinheit zusammen mit einer Kennung, die der MOI zugeordnet ist, und einer Kennung, die der Anbietereinheit zugeordnet ist, nach dem Konfigurieren der generierten MOI.

11. Einrichtung nach dem Anspruch 7, wobei der Prozessor ferner zu Folgendem konfiguriert ist:
Identifizieren, falls die zu erzeugende ECS-Instanz einen virtualisierten Teil enthält;
Identifizieren, falls eine virtuelle Netzwerkfunktionsinstanz, VNF-Instanz, des entsprechenden virtualisierten Teils eines von On-Boarding oder Aktualisieren sein muss;
Aufrufen einer VNF-Paketverwaltung für die entsprechende VNF-Instanz auf Grundlage der Identifizierung; und
Aufrufen einer VNF-Lebenszyklusverwaltung mit der identifizierten Anforderung für die VNF-Instanz für die ECS-Instanz.

## Revendications

1. Procédé permettant le déploiement d'un serveur de configuration périphérique, ECS, par une entité fournisseur dans un système de communication informatique périphérique, le procédé comprenant :
la réception (401) d'une demande d'opération liée au déploiement d'une instance ECS provenant d'une entité consommateur, la demande d'opération comprenant une ou plusieurs exigences associées à l'ECS ;
l'identification (403) d'au moins une classe d'objets d'information, IOC, ECSfunction pour l'ECS sur la base des une ou plusieurs exigences associées à l'ECS ; et
la création (405) de l'instance ECS sur la base de ladite au moins une IOC ECSfunction identifiée et de la demande d'opération,
dans lequel l'IOC ECSfunction est définie avec au moins un attribut comprenant des informations de point de terminaison de l'ECS, des informations sur un serveur facilitateur périphérique, EES, connu de l'ECS comprenant un point de terminaison EES, et des informations de connexion de réseau de données périphérique, EDN,
dans lequel la création de l'instance ECS comprend la création d'une instance d'objet géré, MOI, pour l'au moins une IOC ECSfunction identifiée sur la base de l'au moins un attribut, la MOI correspondant à l'instance ECS.

2. Procédé de la revendication 1, comprenant en outre :
le remplacement d'une valeur dudit au moins un attribut associé à ladite au moins une IOC ECSfunction identifiée sur la base desdites une ou plusieurs exigences comprises dans la demande d'opération, lors de la création de la MOI.

3. Procédé de la revendication 1, dans lequel les une ou plusieurs exigences comprennent au moins l'une parmi : une information de réseau de données de périphérie, EDNIInfo, qui comprend des informations concernant une connexion EDN comprenant DNN/APN, un point d'extrémité EES et S-NSSAI.

4. Procédé de la revendication 2, comprenant en outre :
la transmission d'une réponse de demande d'opération, à l'entité consommateur, avec un identifiant associé à la MOI et un identifiant associé à l'entité fournisseur, après la configuration de la MOI générée.

5. Procédé de la revendication 1, dans lequel la demande d'opération est une demande de création de MOI.

6. Procédé de la revendication 1, comprenant en outre :
l'identification au cas où l'instance ECS à créer contienne une partie virtualisée ;
l'identification au cas où une instance de fonction de réseau virtuel, VNF, de la partie virtualisée correspondante, doive être une fonction d'intégration ou de mise à jour ;
l'appel d'une gestion de package VNF pour l'instance VNF correspondante sur la base de l'identification ; et
l'appel d'une gestion du cycle de vie VNF avec l'exigence identifiée pour l'instance VNF pour l'instance ECS.

7. Appareil d'une entité fournisseur de déploiement d'un serveur de configuration périphérique, ECS dans un système de communication informatique périphérique, l'appareil comprenant :
une mémoire (1403) ; et
un processeur (1401) couplé à la mémoire, dans lequel le processeur est configuré pour :
recevoir une demande d'opération liée au déploiement d'une instance ECS provenant d'une entité consommateur, la demande d'opération comprenant une ou plusieurs exigences associées à l'ECS ;
identifier au moins une classe d'objets d'information, IOC, ECSfunction pour l'ECS sur la base des une ou plusieurs exigences associées à l'ECS ; et
créer l'instance ECS sur la base de ladite au moins une IOC ECSfunction identifiée et de la demande d'opération,
dans lequel l'IOC ECSfunction est définie avec au moins un attribut comprenant des informations de point de terminaison de l'ECS, des informations sur un serveur facilitateur périphérique, EES, connu de l'ECS comprenant un point de terminaison EES, et des informations de connexion de réseau de données périphérique, EDN,
dans lequel en créant l'instance ECS, le processeur est configuré pour créer une instance d'objet géré, MOI, pour l'au moins une IOC ECSfunction identifiée sur la base de l'au moins un attribut, la MOI correspondant à l'instance ECS.

8. Appareil de la revendication 7, dans lequel le processeur est en outre configuré pour :
remplacer une valeur dudit au moins un attribut associé à ladite au moins une IOC ECSfunction identifiée sur la base desdites une ou plusieurs exigences comprises dans la demande d'opération, lors de la création de la MOI.

9. Appareil de la revendication 7, dans lequel les une ou plusieurs exigences comprennent au moins l'une parmi : une EDNIInfo qui comprend des informations concernant une connexion EDN comprenant DNN/APN, un point d'extrémité EES et S-NSSAI.

10. Appareil de la revendication 7, dans lequel le processeur est en outre configuré pour :
transmettre une réponse de demande d'opération, à l'entité consommateur, avec un identifiant associé à la MOI et un identifiant associé à l'entité fournisseur, après la configuration de la MOI générée.

11. Appareil de la revendication 7, dans lequel le processeur est en outre configuré pour :
identifier au cas où l'instance ECS à créer contienne une partie virtualisée ;
identifier au cas où une instance de fonction de réseau virtuel, VNF, de la partie virtualisée correspondante, doive être une fonction d'intégration ou de mise à jour ;
appeler une gestion de package VNF pour l'instance VNF correspondante sur la base de l'identification ; et
appeler une gestion du cycle de vie VNF avec l'exigence identifiée pour l'instance VNF pour l'instance ECS.
